# EUROPÄISCHE PATENTSCHRIFT

(11) **EP 4 126 590 B1**
(45) Veröffentlichungstag und Bekanntmachung des Hinweises auf die Patenterteilung: **27.09.2023**
(21) Anmeldenummer: 21718805.1
(22) Anmeldetag: 26.03.2021
(51) Int. Cl.: B60N 2/06

(54) **LÄNGSVERSTELLVORRICHTUNG FÜR EINEN FAHRZEUGSITZ**
LONGITUDINAL ADJUSTING DEVICE FOR A VEHICLE SEAT
DISPOSITIF DE RÉGLAGE LONGITUDINAL POUR SIÈGE DE VÉHICULE

(30) Priorität: 31.03.2020 DE 102020108920
(43) Veröffentlichungstag der Anmeldung: 08.02.2023
(73) Patentinhaber: FISHER DYNAMICS GERMANY GMBH, 42287 Wuppertal (DE)
(72) Erfinder: BECKER, Hans, Burckhard, 42655 Solingen (DE); SPECK, Axel, 25421 Pinneberg (DE)
(74) Vertreter: Patentanwälte Bauer Vorberg Kayser
(86) Internationale Anmeldenummer: PCT/EP2021/057966
(87) Internationale Veröffentlichungsnummer: WO 2021/198085

(56) Entgegenhaltungen:
- EP-A2- 2 305 512
- FR-A1- 2 928 880
- US-A1- 2017 166 090

## Beschreibung

Die vorliegende Erfindung betrifft eine Längsverstellvorrichtung für einen Fahrzeugsitz. Derartige Längsverstellvorrichtungen dienen dazu, einen Fahrzeugsitz entlang einer Längsrichtung des Fahrzeugs zu versetzen. Neben manuell verstellbaren solchen Vorrichtungen sind hier Längsverstellvorrichtungen gegenständlich, welche motorbetrieben verstellt werden. Bei solchen Längsverstellvorrichtungen ist es einerseits wichtig, dass sie auch großen Belastungen wie etwa im Falle eines Crashs standhalten können. Der Fahrzeugsitz darf sich also keinesfalls in so einem Fall aus seiner Arretierung lösen.

Die DE 10 2006 011 717 B4 zeigt eine Längsverstellvorrichtung, bei der eine Bodenschiene mit dem Fahrzeugboden und eine Sitzschiene mit dem Fahrzeugsitz verbunden ist. Eine motorgetriebene Längsverstellung erfolgt durch eine Welle, welche über eine Schnecke eine Spindelmutter antreibt, die mit einer Spindel ein Spindel-Muttergetriebe bildet. Die Schnecke und die Spindelmutter sind in einem Getriebegehäuse angeordnet, welches mittels Zapfen an einer oberen Wandung der Sitzschiene befestigt sind. Die Spindel ist wiederum starr mit der Bodenschiene verbunden.

Jedoch ist bei dieser Längsverstellvorrichtung aus dem Stand der Technik die Befestigung des Getriebegehäuses an der Sitzschiene nicht so stark wie sie sein könnte. Sollte sich die Befestigung des Getriebegehäuses von der Sitzschiene lösen, so wäre der Fahrzeugsitz insgesamt nicht mehr mit dem Fahrzeug befestigt. Aber selbst wenn es bei einem Crash zu keinem vollständigen Abriss des Getriebegehäuses von der Sitzschiene kommen sollte, so ist dennoch eine so weitgehende Beschädigung der Befestigung wahrscheinlich, dass ein bestimmungsgemäßer Betrieb nicht mehr möglich ist.

Die FR 2 928 880 A1 beschreibt einen Unterbau, welcher Gleitschienen aufweist, die ein bewegliches Profil und ein feststehendes Profil umfassen, die relativ zueinander entlang einer Längsrichtung verschiebbar montiert sind. Ein Einstellmechanismus hat eine Schraube, die drehbar an einem Gehäuse montiert ist. Zwischen den Schiebern erstreckt sich entlang einer zur Längsrichtung senkrechten Querrichtung ein Querträger. Ein Motor wird von dem Querträger getragen, und Übertragungsketten treiben die Schnecke drehend an. Die Traverse ist direkt am Gehäuse befestigt.

Die US 2017/0166090 A1 offenbart eine Einstellvorrichtung zum Einstellen einer Längsposition eines Fahrzeugsitzes, welche umfasst: eine erste Führungsschiene; eine Spindel, die an der ersten Führungsschiene befestigt ist und sich entlang einer Längsachse erstreckt; eine zweite Führungsschiene, die entlang der Längsachse in Bezug auf die erste Führungsschiene linear bewegbar ist, wobei die zweite Führungsschiene eine Basis und einen ersten Schenkel aufweist, der sich von der Basis erstreckt; und ein Getriebe, das an der zweiten Führungsschiene befestigt ist und ein Gehäuse aufweist, wobei das Getriebe in Wirkverbindung mit der Spindel steht, um die zweite Führungsschiene relativ zu der ersten Führungsschiene zu bewegen. An der zweiten Führungsschiene ist mindestens ein Stützelement angeordnet, wobei das mindestens eine Stützelement eine quer zur Längsachse verlaufende und dem Gehäuse des Getriebes zugewandte Stützfläche zum Abstützen des Getriebes gegenüber der zweiten Führungsschiene aufweist. Die Stützfläche umfasst eine erste Kante, die der Basis oder dem ersten Bein zugewandt ist und einen Schweißabschnitt aufweist, über den die erste Kante an der Basis oder dem ersten Bein durch Schweißen befestigt ist, wobei eine Lasche von der ersten Kante vorsteht und in eine Öffnung davon eingreift Basis oder das erste Bein.

Die EP 2 305 512 A2, von welcher die Erfindung als nächstkommend ausgeht, offenbart eine untere Schiene oder eine obere Schiene. Diese hat eine erste Wand, die an einer Position in Breitenrichtung auf einer ersten von zwei gegenüberliegenden Seiten angeordnet ist und eine zweite Wand, die an einer Position in Breitenrichtung auf der jeweils anderen Seite und gegenüber der ersten Wand angeordnet ist. Mindestens eine der ersten Wand und der zweiten Wand hat eine Öffnung. Mindestens ein äußerer Abschnitt des Halteelements in Breitenrichtung und ein äußerer Abschnitt des Mutternelements in Breitenrichtung ist in die Öffnung eingesetzt und gegenüber einer inneren Seitenfläche der Öffnung angeordnet.

Die Aufgabe der Erfindung besteht daher darin, die aus dem Stand der Technik bekannte Längsverstellvorrichtung hinsichtlich ihrer Verformung gegenüber der bei einem Crash auftretenden Belastungen zu verbessern.

Bezogen auf eine Längsverstellvorrichtung mit den Merkmalen des Oberbegriffs von Anspruch 1 wird diese Aufgabe durch die Merkmale des kennzeichnenden Teils von Anspruch 1 gelöst.

Wesentlich für die Erfindung ist die Erkenntnis, dass eine gegenüber dem Fahrzeugboden winklige Anordnung der Öffnungen der Sitzschiene zur Befestigung des Getriebegehäuses es aus verschiedenen Gründen ermöglicht, Crashbelastungen besser aufzunehmen. Speziell wird es bereits durch eine geringfügige Vergrößerung der Ausdehnung der Längsverstellvorrichtung möglich, die durch die Öffnungen geführten Befestigungsmittel robuster zu gestalten oder gleich auch auf der gegenüberliegenden Seite durchzuführen.

Die vorschlagsgemäße Längsverstellvorrichtung ist für einen Fahrzeugsitz. Die vorschlagsgemäße Längsverstellvorrichtung weist eine Bodenschiene zur Befestigung an einem Fahrzeugboden auf, wobei die Bodenschiene eine Bodenwandung zur Auflage auf dem Fahrzeugboden aufweist. Anders ausgedrückt liegt die Bodenwandung bei bestimmungsgemäßer Anordnung der Längsverstellvorrichtung in dem Fahrzeug auf dem Fahrzeugboden auf.

Die vorschlagsgemäße Längsverstellvorrichtung weist weiter eine gegenüber der Bodenschiene verschiebbare Sitzschiene, eine starr mit der Bodenschiene gekoppelte Spindel und ein Getriebe auf, welches Getriebe eine mit der Spindel in Eingriff stehende Spindelmutter aufweist und axial starr mit der Sitzschiene gekoppelt ist. Axial starr gekoppelt bedeutet, das das Getriebe bezüglich einer Bewegung entlang einer Längsachse der Spindel starr mit der Sitzschiene gekoppelt ist.

Ebenso weist die vorschlagsgemäße Längsverstellvorrichtung Befestigungsmittel auf, welche Befestigungsmittel durch Befestigungsöffnungen an einer Befestigungswandung der Sitzschiene zur Befestigung des Getriebes an der Sitzschiene geführt sind.

Bei der vorschlagsgemäßen Längsverstellvorrichtung ist die Befestigungswandung winklig zur Bodenwandung angeordnet. Anders ausgedrückt verläuft die Befestigungswandung nicht parallel zur Bodenwandung. Da die Bodenwandung auf dem Fahrzeugboden aufliegen soll, verläuft die Befestigungswandung insbesondere nicht parallel zum Fahrzeugboden. Weiter ist bevorzugt, dass die Befestigungswandung mit der Bodenschiene in Eingriff steht. Dieser Eingriff steht der Verschiebbarkeit der Sitzschiene gegenüber der Bodenschiene nicht entgegen.

Grundsätzlich kann die Bodenschiene auf beliebige Art und Weise sowie entweder direkt oder indirekt an dem Fahrzeugboden befestigt werden. Bevorzugt ist, dass die Bodenwandung Öffnungen zur Befestigung der Bodenschiene an dem Fahrzeugboden aufweist. Insbesondere kann die Längsverstellvorrichtung durch die Öffnungen geführte Bodenbefestigungsmittel zur Befestigung der Bodenschiene an dem Fahrzeugboden aufweisen.

Bei der vorschlagsgemäßen Längsverstellvorrichtung weist die Sitzschiene eine im Wesentlichen parallel zur Befestigungswandung angeordnete Seitenwandung auf. Bevorzugt ist, dass die Seitenwandung mit der Bodenschiene in Eingriff steht. Speziell ist vorgesehen, dass durch den jeweiligen Eingriff der Befestigungswandung und der Seitenwandung mit der Bodenschiene die Sitzschiene für die Verschiebbarkeit gegenüber der Bodenschiene geführt wird. Vorzugsweise ist die Seitenwandung gegenüberliegend zur Befestigungswandung angeordnet.

Bei der vorschlagsgemäßen Längsverstellvorrichtung weist die Seitenwandung mit den Befestigungsöffnungen fluchtende Seitenöffnungen auf. Vorschlagsgemäß sind die Befestigungsmittel durch die Seitenöffnungen geführt. Indem die Befestigungsmittel dann sowohl durch die Befestigungswandung als auch durch die Seitenwandung geführt sind ist gewährleistet, dass besonders große Belastungskräfte aufgenommen werden können. Die Befestigungsmittel können einstückig ausgebildet sein.

Gemäß einer bevorzugten Ausführungsform der vorschlagsgemäßen Längsverstellvorrichtung ist vorgesehen, dass die Sitzschiene mit der Bodenschiene zum Bilden eines Kanals in Eingriff steht. Bevorzugt ist die Spindel in dem Kanal angeordnet. Es kann sein, dass die Befestigungsmittel in den Kanal hineinragen. Ebenso kann es sein, dass die Befestigungsmittel den Kanal queren. Mit dem Ausdruck "queren" ist gemeint, dass sie sowohl in den Kanal hineingeführt als auch wieder durch den Kanal herausgeführt sind.

Die vorschlagsgemäße Längsverstellvorrichtung ist dadurch gekennzeichnet, dass das Getriebe einen Getriebehalter mit einem Mittelteil und mit den Mittelteil flankierenden Seitenteilen zur Befestigung des Getriebes an der Sitzschiene aufweist und dass die Seitenteile jeweils eine Halteröffnung aufweisen durch welche die Befestigungsmittel jeweils geführt sind. Vorzugsweise fluchten die Halteröffnungen der Seitenteile mit den Befestigungsöffnungen. Vorzugsweise ist der Getriebehalter einstückig ausgebildet.

Eine bevorzugte Ausführungsform der vorschlagsgemäßen Längsverstellvorrichtung ist dadurch gekennzeichnet, dass die Sitzschiene gegenüber der Bodenschiene entlang einer Verschiebeachse verschiebbar. Hier kann es insbesondere sein, dass der Mittelteil im Wesentlichen entlang der Verschiebeachse zwischen den Seitenteilen angeordnet ist. Anders ausgedrückt sind die Seitenteile gegenüber dem Mittelteil zumindest auch entlang der Verschiebeachse und dann jeweils in entgegengesetzter Richtung versetzt. Bevorzugt ist weiter, dass der Mittelteil eine im Wesentlichen zu der Befestigungswandung parallele Mittelteilwandung aufweist.

Eine weitere bevorzugte Ausführungsform der vorschlagsgemäßen Längsverstellvorrichtung ist dadurch gekennzeichnet, dass die Seitenteile jeweils eine Winkelwandung mit der Halteröffnung und eine winklig zu der Winkelwandung angeordnete Übergangswandung aufweisen. Bevorzugt ist weiter, dass die Winkelwandungen jeweils durch die Übergangswandung mit dem Mittelteil verbunden sind. Vorzugsweise weisen die Seitenteile Spindelöffnungen auf, durch welche Spindelöffnungen die Spindel geführt ist. Bevorzugt ist, dass die Übergangswandungen die Spindelöffnungen aufweisen.

Gemäß einer bevorzugten Ausführungsform der vorschlagsgemäßen Längsverstellvorrichtung ist vorgesehen, dass entlang einer senkrecht zu dem Fahrzeugboden ausgerichteten Vertikalachse die Halteröffnungen versetzt zu den Spindelöffnungen angeordnet sind. Auf diese Weise kann vermieden werden, dass die Befestigungsmittel in Eingriff mit der Spindel gelangen. Weiter kann es sein, dass entlang der Vertikalachse die Halteröffnungen nichtüberlappend versetzt zu den Spindelöffnungen angeordnet sind. Nichtüberlappend versetzt bedeutet, dass bei einer jeweiligen Projektion der Spindelöffnungen und der Halteröffnungen in einer jeweiligen Normalrichtung der Öffnungsfläche sich diese Projektionen nicht berühren.

Gemäß einer weiteren bevorzugten Ausführungsform der vorschlagsgemäßen Längsverstellvorrichtung ist vorgesehen, dass die Befestigungswandung winklig zum Fahrzeugboden angeordnet ist. Vorzugsweise ist die Befestigungswandung im Wesentlichen rechtwinklig zur Bodenwandung angeordnet. Entsprechend ist es bevorzugt, dass die Befestigungswandung im Wesentlichen rechtwinklig zum Fahrzeugboden angeordnet ist.

Eine bevorzugte Ausführungsform der vorschlagsgemäßen Längsverstellvorrichtung ist dadurch gekennzeichnet, dass die Bodenschiene erste Sperrfenster zur Aufnahme von ersten Sperrarmen aufweist. Durch diese ersten Sperrfenster kann eine Arretierung der Sitzschiene gegenüber der Bodenschiene erreicht werden. Vorzugsweise sind die ersten Sperrfenster entlang der Verschiebeachse zueinander versetzt. Vorzugsweise weist die Bodenschiene zweite Sperrfenster zur Aufnahme von zweiten Sperrarmen aufweist, welche zweiten Sperrfenster in Richtung der Befestigungswandung versetzt zu den ersten Sperrfenstern angeordnet sind. Durch das Vorsehen zusätzlicher zweiter Sperrfenster kann die Möglichkeit der Arretierung verbessert werden.

Eine weitere bevorzugte Ausführungsform der vorschlagsgemäßen Längsverstellvorrichtung ist dadurch gekennzeichnet, dass die Längsvorstelleinrichtung eine Welle zum Antrieb der Spindelmutter aufweist und dass das Getriebe eine Aufnahme für die Welle aufweist, welche Aufnahme dazu eingerichtet ist, eine Drehbewegung der Welle auf die Spindelmutter zu übertragen. Grundsätzlich kann die Übertragung der Drehbewegung der Welle auf die Spindelmutter auf beliebige Art und Weise erfolgen. Bevorzugt, dass die Aufnahme mit einer Schnecke des Getriebes gekoppelt ist, welche Schnecke mit der Spindelmutter in Eingriff steht. Insbesondere kann die Schnecke mit einer Außenverzahnung der Spindelmutter in Eingriff stehen.

Gemäß einer bevorzugten Ausführungsform der Längsverstellungsvorrichtung ist vorgesehen, dass das Getriebe ein Getriebegehäuse aufweist, in welchem Getriebegehäuse die Aufnahme und die Spindelmutter angeordnet sind. Vorzugsweise ist auch die Schnecke in dem Getriebegehäuse angeordnet. Insbesondere kann es sein dass das Getriebegehäuse von dem Getriebehalter umgriffen wird.

Gemäß einer weiteren bevorzugten Ausführungsform der Längsverstellungsvorrichtung ist vorgesehen, dass das Getriebegehäuse in Richtung der Vertikalachse eine größere Ausdehnung aufweist als in Richtung der Verschiebeachse.

Eine bevorzugte Ausführungsform der Längsverstellvorrichtung ist dadurch gekennzeichnet, dass das Getriebe Gummifassungen aufweist, zwischen denen das Getriebegehäuse eingefasst ist. Vorzugsweise sind die Gummifassungen zwischen dem Getriebehalter und dem Getriebegehäuse angeordnet. Insbesondere kann es sein, dass die Gummifassungen entlang der Verschiebeachse zueinander versetzt angeordnet sind.

Eine weitere bevorzugte Ausführungsform der Längsverstellvorrichtung ist dadurch gekennzeichnet, dass die Befestigungswandung eine Wellenöffnung aufweist, durch welche die Welle geführt ist. Bevorzugt ist weiter, dass die Wellenöffnung insbesondere entlang der Verschiebeachse zwischen den Befestigungsöffnungen angeordnet ist. Es kann speziell sein, dass die Wellenöffnung entlang der Vertikalachse auf Höhe der Befestigungsöffnungen angeordnet ist.

Gemäß einer bevorzugten Ausführungsform der Längsverstellvorrichtung ist vorgesehen, dass die Sitzschiene eine Oberwandung aufweist, welche im Wesentlichen parallel zur Bodenwandung angeordnet ist. Vorzugsweise ist die Oberwandung winklig und insbesondere rechtwinklig zur Befestigungswandung angeordnet ist. Ebenso kann es sein, dass die Oberwandung die Befestigungswandung mit der Seitenwandung verbindet.

Weitere vorteilhafte und bevorzugte Ausgestaltungen ergeben sich aus der nachfolgenden Beschreibung mit Bezug auf die Figuren, die lediglich ein Ausführungsbeispiel zeigen. Es zeigt
- Fig. 1: eine Explosionsansicht im Detail eines Ausführungsbeispiel der vorschlagsgemäßen Längsverstellvorrichtung und
- Fig. 2: eine perspektivische Schnittansicht der Längsverstellvorrichtung der Fig. 1.

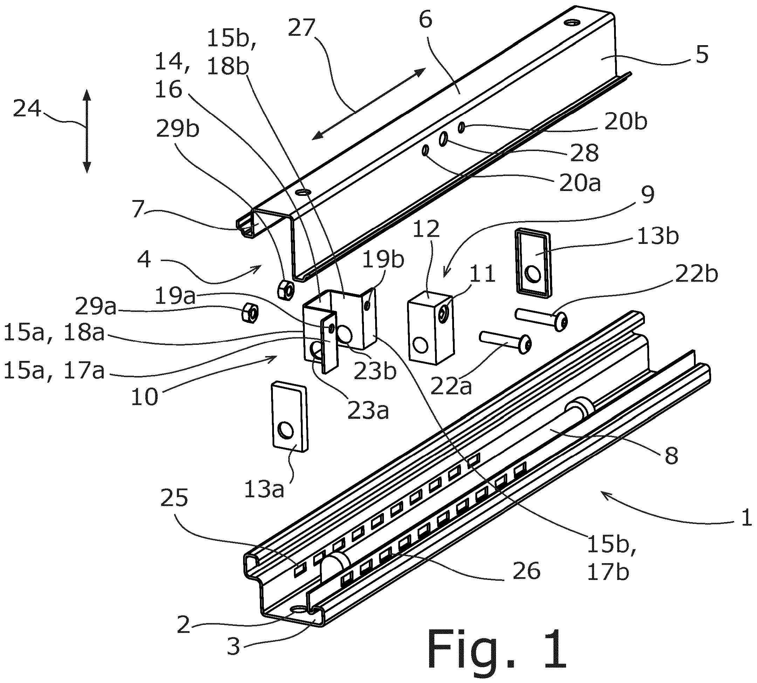

Die in der Fig. 1 gezeigte Längsverstellvorrichtung dient der Längsverstellung eines hier nicht gezeigten Fahrzeugsitzes. Die Längsverstellvorrichtung weist eine Bodenschiene 1 auf, welche durch ihre Öffnungen 2 an der Bodenwandung 3 an dem - hier nicht gezeigten - Fahrzeugboden befestigt werden kann. Im Falle einer solchen Befestigung ist der Fahrzeugboden parallel zur Bodenwandung 3 ausgerichtet. Die Bodenschiene weist ferner erste Sperrfenster 25 sowie zweite Sperrfenster 26 auf, welche zum Sperren bei einer manuellen Längsverstellung nach Erreichen der gewünschten Position dienen. Die in die ersten Sperrfenster 25 und in die zweiten Sperrfenster 26 dann eingreifenden Sperrarme sind hier nicht gezeigt.

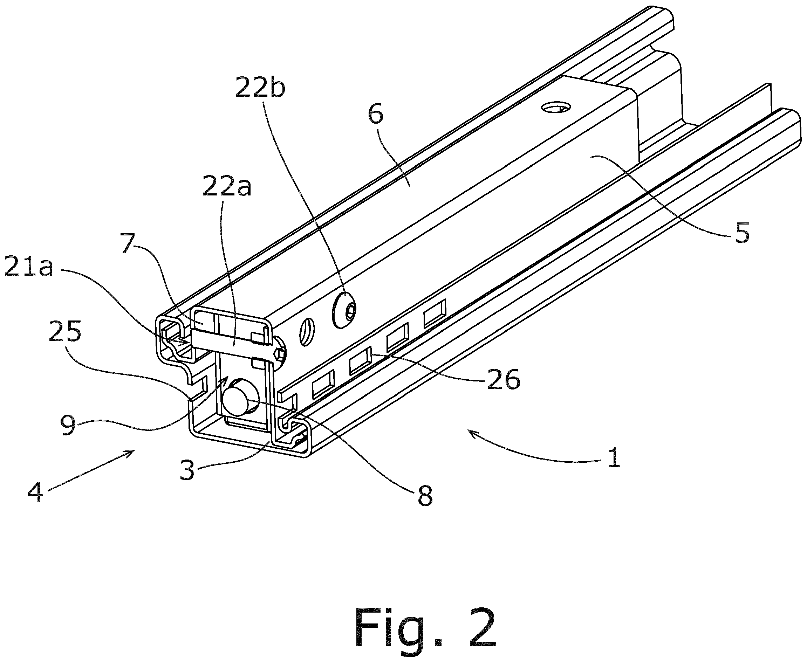

Ebenso weist die Längsverstellvorrichtung eine Sitzschiene 4 mit einer Befestigungswandung 5, einer Oberwandung 6 und einer Seitenwandung 7 auf. Die Sitzschiene 4 ist - wie in der Fig. 2 dargestellt - derart mit der Bodenschiene 1 in Eingriff, dass sie gegenüber der Bodenschiene 1 entlang einer Verschiebeachse 27 verschiebbar ist. Die Befestigungswandung 5 steht senkrecht zu der Bodenwandung 3 und damit auch zu dem Fahrzeugboden.

Die Bodenschiene 1 und die Sitzschiene 4 bilden durch ihren Eingriff einen Kanal, in welchem eine starr mit der Bodenschiene 1 gekoppelte Spindel 8 angeordnet ist. Wiederum starr mit der Sitzschiene 4 gekoppelt ist ein Getriebe 9, welches aus einem Getriebehalter 10, einer Aufnahme 11 für eine - hier nicht gezeigte - Welle, einem Getriebegehäuse 12, Gummifassungen 13a, b sowie einer mit der Spindel 8 in Eingriff stehende Spindelmutter und einer Schnecke besteht. Die Aufnahme 11 kann durch die mit ihr in Eingriff stehende Welle angetrieben werden, wodurch die Schnecke angetrieben wird und durch diese wiederum die Spindelmutter, die mit ihrer Außenverzahnung mit der Schnecke in Eingriff steht. Schnecke und Spindelmutter sind in dem Getriebegehäuse 12 angeordnet und daher hier ebenfalls nicht gesondert dargestellt.

Die Drehung der Spindelmutter bewirkt eine Verschiebung des Getriebes 9 und damit der Sitzschiene 4 in Richtung der Verschiebeachse 27. Die Befestigungswandung 5 weist eine mit der Aufnahme 11 fluchtende Wellenöffnung 28 auf. Der Getriebehalter besteht aus einem Mittelteil 14 mit einer Mittelteilwandung 16 sowie aus Seitenteilen 15a, b, welche Seitenteile 15a, b, jeweils eine Winkelwandung 17a, b sowie eine Übergangswandung 18a, b aufweisen. Die Winkelwandungen 17a, b weisen jeweils eine Halteröffnung 19a, b auf, welche wiederum jeweils mit Befestigungsöffnungen 20a, b in der Befestigungswandung 5 fluchten. Ebenso fluchten die Halteröffnungen 19a, b jeweils mit Seitenöffnungen 21a, b in der Seitenwandung 7. Hier als Schrauben ausgebildete Befestigungsmittel 22a, b sind jeweils durch die Befestigungsöffnungen 20a, b, die Halteröffnungen 19a, b und die Seitenöffnungen 21a, b geführt und queren somit beide den Kanal. Crashbelastungen auf den Fahrzeugsitz können nun sowohl von der Befestigungswandung 5 als auch von der Seitenwandung 7 aufgenommen werden. Die Schrauben stehen mit einer jeweiligen Schraubenmutter 29a, b in Eingriff.

Die Übergangswandungen 18a, b weisen jeweils eine Spindelöffnung 23a, b auf, durch welche die Spindel 8 geführt ist. Durch den Versatz der Spindelöffnungen 23a, b gegenüber den Halteröffnungen 19a, b entlang der Vertikalachse 24, welche vertikal zu dem Fahrzeugboden und zu der Bodenwandung 3 ausgerichtet ist, besteht kein Eingriff zwischen der Spindel 8 und den Befestigungsmitteln 22a, b.

## Patentansprüche

1. Längsverstellvorrichtung für einen Fahrzeugsitz mit einer Bodenschiene (1) zur Befestigung an einem Fahrzeugboden, wobei die Bodenschiene (1) eine Bodenwandung (3) zur Auflage auf dem Fahrzeugboden aufweist, mit einer gegenüber der Bodenschiene (1) verschiebbaren Sitzschiene (4), mit einer starr mit der Bodenschiene (1) gekoppelten Spindel (8), mit einem Getriebe (9), welches eine mit der Spindel (8) in Eingriff stehende Spindelmutter aufweist und axial starr mit der Sitzschiene (4) gekoppelt ist und mit Befestigungsmitteln, (22a, b) welche durch Befestigungsöffnungen (20a, b) an einer Befestigungswandung (5) der Sitzschiene (4) zur Befestigung des Getriebes (9) an der Sitzschiene (4) geführt sind, wobei die Befestigungswandung (5) winklig zur Bodenwandung (3) angeordnet ist, wobei die Sitzschiene (4) eine im Wesentlichen parallel zur Befestigungswandung (5) angeordnete Seitenwandung (7) aufweist,
, wobei die Seitenwandung (7) mit den Befestigungsöffnungen (20a, b) fluchtende Seitenöffnungen (21a, b) aufweist und wobei die Befestigungsmittel (22a, b) durch die Seitenöffnungen (21a, b) geführt sind, **dadurch gekennzeichnet, dass** das Getriebe (9) einen Getriebehalter (10) mit einem Mittelteil (14) und mit den Mittelteil flankierenden Seitenteilen (15a, b) zur Befestigung des Getriebes (9) an der Sitzschiene (4) aufweist und dass die Seitenteile (15a, b) jeweils eine Halteröffnung (19a, b) aufweisen durch welche die Befestigungsmittel (22a, b) jeweils geführt sind.

2. Längsverstellvorrichtung nach Anspruch 1, **dadurch gekennzeichnet, dass** die Sitzschiene (4) mit der Bodenschiene (1) zum Bilden eines Kanals in Eingriff steht, vorzugsweise, dass die Befestigungsmittel (22a, b) in den Kanal hineinragen.

3. Längsverstellvorrichtung nach Anspruch 1 oder 2, **dadurch gekennzeichnet, dass** die Halteröffnungen (19a, b) der Seitenteile (15a, b) mit den Befestigungsöffnungen (20a, b) fluchten.

4. Längsverstellvorrichtung nach einem der Ansprüche 1 bis 3, **dadurch gekennzeichnet, dass** die Sitzschiene (4) gegenüber der Bodenschiene (1) entlang einer Verschiebeachse (27) verschiebbar ist, insbesondere, dass der Mittelteil (14) entlang der Verschiebeachse (27) zwischen den Seitenteilen (15a, b) angeordnet ist, vorzugsweise, dass der Mittelteil (14) eine im Wesentlichen zu der Befestigungswandung (5) parallele Mittelteilwandung (16) aufweist.

5. Längsverstellvorrichtung nach einem der Ansprüche 1 bis 4, **dadurch gekennzeichnet, dass** die Seitenteile (15a, b) jeweils eine Winkelwandung (17a, b) mit der Halteröffnung (19a, b) und eine winklig zu der Winkelwandung (17a, b) angeordnete Übergangswandung (18a, b) aufweisen, vorzugsweise, dass die Seitenteile (15a, b) Spindelöffnungen (23a, b) aufweisen, durch welche Spindelöffnungen (23a, b) die Spindel (8) geführt ist, insbesondere, dass die Übergangswandungen (18a, b) die Spindelöffnungen (23a, b) aufweisen.

6. Längsverstellvorrichtung nach Anspruch 5, **dadurch gekennzeichnet, dass** entlang einer senkrecht zu dem Fahrzeugboden ausgerichteten Vertikalachse (24) die Halteröffnungen (19a, b) versetzt, insbesondere nichtüberlappend versetzt, zu den Spindelöffnungen (23a, b) angeordnet sind.

7. Längsverstellvorrichtung nach einem der Ansprüche 1 bis 6, **dadurch gekennzeichnet, dass** die Befestigungswandung (5) winklig zum Fahrzeugboden angeordnet ist, vorzugsweise, dass die Befestigungswandung (5) im Wesentlichen rechtwinklig zur Bodenwandung (3) angeordnet ist, insbesondere, dass die Befestigungswandung (5) im Wesentlichen rechtwinklig zum Fahrzeugboden angeordnet ist.

8. Längsverstellvorrichtung nach einem der Ansprüche 1 bis 7, **dadurch gekennzeichnet, dass** die Bodenschiene (1) erste, vorzugsweise entlang der Verschiebeachse (27) zueinander versetzte, Sperrfenster (25) zur Aufnahme von ersten Sperrarmen aufweist, vorzugsweise, dass die Bodenschiene (1) zweite Sperrfenster (26) zur Aufnahme von zweiten Sperrarmen aufweist, welche zweiten Sperrfenster (26) in Richtung der Befestigungswandung (5) versetzt zu den ersten Sperrfenstern (25) angeordnet sind.

9. Längsverstellvorrichtung nach einem der Ansprüche 1 bis 8, **dadurch gekennzeichnet, dass** die Längsvorstelleinrichtung eine Welle zum Antrieb der Spindelmutter aufweist und dass das Getriebe (9) eine Aufnahme (11) für die Welle aufweist, welche Aufnahme (11) dazu eingerichtet ist, eine Drehbewegung der Welle auf die Spindelmutter zu übertragen, vorzugsweise, dass die Aufnahme mit einer Schnecke des Getriebes (9) gekoppelt ist, welche Schnecke mit der Spindelmutter in Eingriff steht.

10. Längsverstellvorrichtung nach Anspruch 9, **dadurch gekennzeichnet, dass** das Getriebe (9) ein Getriebegehäuse (12) aufweist, in welchem Getriebegehäuse (12) die Aufnahme (11) und die Spindelmutter, vorzugsweise auch die Schnecke, angeordnet sind, insbesondere, dass das Getriebegehäuse (12) von dem Getriebehalter (10) umgriffen wird.

11. Längsverstellvorrichtung nach Anspruch 10, **dadurch gekennzeichnet, dass** das Getriebegehäuse (12) in Richtung der Vertikalachse (24) eine größere Ausdehnung aufweist als in Richtung der Verschiebeachse (27).

12. Längsverstellvorrichtung nach Anspruch 9 oder 10, **dadurch gekennzeichnet, dass** das Getriebe (9) Gummifassungen (13a, b) aufweist, zwischen denen das Getriebegehäuse (12) eingefasst ist, vorzugsweise, dass die Gummifassungen (13a, b) zwischen dem Getriebehalter (10) und dem Getriebegehäuse (12) angeordnet sind, insbesondere, dass die Gummifassungen (13a, b) entlang der Verschiebeachse (27) zueinander versetzt angeordnet sind.

13. Längsverstellvorrichtung nach einem der Ansprüche 9 bis 12, **dadurch gekennzeichnet, dass** die Befestigungswandung (5) eine Wellenöffnung (28) aufweist, durch welche die Welle geführt ist, vorzugsweise, dass die Wellenöffnung (28) insbesondere entlang der Verschiebeachse (7) zwischen den Befestigungsöffnungen (20a, b) angeordnet ist, insbesondere dass die Wellenöffnung (28) entlang der Vertikalachse (24) auf Höhe der Befestigungsöffnungen (20a, b) angeordnet ist.

## Claims

1. A longitudinal adjusting device for a vehicle seat with a floor rail (1) for fastening to a vehicle floor, the floor rail (1) having a base wall (3) for resting on the vehicle floor, with a seat rail (4) which is displaceable with respect to the floor rail (1), with a spindle (8) which is rigidly coupled to the floor rail (1), with a gear (9), which has a spindle nut, which is in engagement with the spindle (8), and is axially rigidly coupled to the seat rail (4), and with fastening means (22a, b), which are guided through fastening openings (20a, b) on a fastening wall (5) of the seat rail (4) for fastening the gear (9) on the seat rail (4), the fastening wall (5) being arranged at an angle to the base wall (3), the seat rail (4) having a side wall (7) arranged substantially parallel to the fastening wall (5),
the side wall (7) having side openings (21a, b) which are flush with the fastening openings (20a, b) and the fastening means (22a, b) being guided through the side openings (21a, b),
**characterized in that** the gear (9) has a gear holder (10) with a central part (14) and with side parts (15a, b) flanking the central part for fastening the gear (9) to the seat rail (4) and **in that** the side parts (15a, b) in each case have a holder opening (19a, b), through which the fastening means (22a, b) are guided in each case.

2. The longitudinal adjusting device according to Claim 1, **characterized in that** the seat rail (4) is in engagement with the floor rail (1) to form a channel, preferably in that the fastening means (22a, b) protrude into the channel.

3. The longitudinal adjusting device according to Claim 1 or 2, **characterized in that** the holder openings (19a, b) of the side parts (15a, b) are flush with the fastening openings (20a, b).

4. The longitudinal adjusting device according to one of Claims 1 to 3, **characterized in that** the seat rail (4) can be displaced along a displacement axis (27) with respect to the floor rail (1), particularly **in that** the central part (14) is arranged along the displacement axis (27) between the side parts (15a, b), preferably in that the central part (14) has a central part wall (16) which is substantially parallel to the fastening wall (5).

5. The longitudinal adjusting device according to one of Claims 1 to 4, **characterized in that** the side parts (15a, b) in each case have an angled wall (17a, b) with the holder opening (19a, b) and a transition wall (18a, b) arranged at an angle to the angled wall (17a, b), preferably **in that** the side parts (15a, b) have spindle openings (23a, b), through which spindle openings (23a, b) the spindle (8) is guided, particularly **in that** the transition walls (18a, b) have the spindle openings (23a, b).

6. The longitudinal adjusting device according to Claim 5, **characterized in that** the holder openings (19a, b) are arranged offset, in particular offset in a nonoverlapping manner, with respect to the spindle openings (23a, b) along a vertical axis (24) orientated perpendicular to the vehicle floor.

7. The longitudinal adjusting device according to one of Claims 1 to 6, **characterized in that** the fastening wall (5) is arranged at an angle with respect to the vehicle floor, preferably **in that** the fastening wall (5) is arranged substantially at right angles to the base wall (3), particularly **in that** the fastening wall (5) is arranged substantially at right angles to the vehicle floor.

8. The longitudinal adjusting device according to one of Claims 1 to 7, **characterized in that** the floor rail (1) has first catch apertures (25) for accommodating first catch arms, which first catch apertures are preferably offset with respect to one another along the displacement axis (27), preferably **in that** the floor rail (1) has second catch apertures (26) for accommodating second catch arms, which second catch apertures (26) are arranged offset with respect to the first catch apertures (25) in the direction of the fastening wall (5).

9. The longitudinal adjusting device according to one of Claims 1 to 8, **characterized in that** the longitudinal adjusting device has a shaft for driving the spindle nut and **in that** the gear (9) has a receptacle (11) for the shaft, which receptacle (11) is set up to transmit a rotational movement of the shaft to the spindle nut, preferably **in that** the receptacle is coupled to a worm of the gear (9), which worm is in engagement with the spindle nut.

10. The longitudinal adjusting device according to Claim 9, **characterized in that** the gear (9) has a gear housing (12), in which gear housing (12) the receptacle (11) and the spindle nut, preferably also the worm, are arranged, particularly **in that** the gear housing (12) is surrounded by the gear holder (10).

11. The longitudinal adjusting device according to Claim 10, **characterized in that** the gear housing (12) has a larger extent in the direction of the vertical axis (24) than in the direction of the displacement axis (27) .

12. The longitudinal adjusting device according to Claim 9 or 10, **characterized in that** the gear (9) has rubber mountings (13a, b), between which the gear housing (12) is enclosed, preferably **in that** the rubber mountings (13a, b) are arranged between the gear holder (10) and the gear housing (12), particularly **in that** the rubber mountings (13a, b) are arranged offset with respect to one another along the displacement axis (27).

13. The longitudinal adjusting device according to one of Claims 9 to 12, **characterized in that** the fastening wall (5) has a shaft opening (28), through which the shaft is guided, preferably **in that** the shaft opening (28) is arranged along the displacement axis (7) between the fastening openings (20a, b) in particular, particularly **in that** the shaft opening (28) is arranged along the vertical axis (24) at the height of the fastening openings (20a, b).

## Revendications

1. Dispositif de réglage en longueur pour un siège de véhicule doté d'un rail de plancher (1) destiné à se fixer sur un plancher de véhicule, le rail de plancher (1) comportant une paroi de plancher (3) destinée à reposer sur le plancher de véhicule, d'un rail de siège (4) pouvant se déplacer par rapport au rail de plancher (1), d'une tige (8) accouplée rigidement au rail de plancher (1), d'une transmission (9), qui comporte un écrou de tige qui est en prise avec la tige (8) et qui est accouplée rigidement en direction axiale au rail de siège (4) et de moyens de fixation, (22a, b) qui sont passés par des ouvertures de fixation (20a, b) sur une paroi de fixation (5) du rail de siège (4) pour fixer la transmission (9) au rail de siège (4), la paroi de fixation (5) étant disposée de manière angulaire par rapport à la paroi de plancher (3), le rail de siège (4) comportant une paroi latérale (7) disposée sensiblement à la parallèle de la paroi de fixation (5),
la paroi latérale (7) comportant des ouvertures latérales (21a, b) alignées avec les ouvertures de fixation (20a, b) et les moyens de fixation (22a, b) étant passés par les ouvertures latérales (21a, b),
**caractérisé en ce que**
la transmission (9) comporte un support de transmission (10) avec une partie centrale (14) et avec des parties latérales (15a, b) encadrant la partie centrale pour fixer la transmission (9) sur le rail de siège (4), et **en ce que** les parties latérales (15a, b) comportent chacune une ouverture de support (19a, b) à travers laquelle est passé chacun des moyens de fixation (22a, b) .

2. Dispositif de réglage en longueur selon la revendication 1, **caractérisé en ce que** le rail de siège (4) est en prise avec le rail de plancher (1) pour former un canal, de préférence, **en ce que** les moyens de fixation (22a, b) saillissent dans le canal.

3. Dispositif de réglage en longueur selon la revendication 1 ou 2, **caractérisé en ce que** les ouvertures de support (19a, b) des parties latérales (15a, b) sont alignées avec les ouvertures de fixation (20a, b).

4. Dispositif de réglage en longueur selon l'une quelconque des revendications 1 à 3, **caractérisé en ce que** le rail de siège (4) peut se déplacer par rapport au rail de plancher (1) le long d'un axe de déplacement (27), en particulier, **en ce que** la partie centrale (14) est disposée le long de l'axe de déplacement (27) entre les parties latérales (15a, b), de préférence, **en ce que** la partie centrale (14) comporte une paroi de partie centrale (16) sensiblement parallèle à la paroi de fixation (5).

5. Dispositif de réglage en longueur selon l'une quelconque des revendications 1 à 4, **caractérisé en ce que** les parties latérales (15a, b) comportent chacune une paroi angulaire (17a, b) avec l'ouverture de support (19a, b) et une paroi de transition (18a, b) disposée de manière angulaire par rapport à la paroi angulaire (17a, b), de préférence, **en ce que** les parties latérales (15a, b) comportent des ouvertures de tige (23a, b) à travers lesquellesouvertures de tige (23a, b) est passée la tige (8), en particulier, **en ce que** les parois de transition (18a, b) comportent les ouvertures de tige (23a, b).

6. Dispositif de réglage en longueur selon la revendication 5, **caractérisé en ce que** les ouvertures de support (19a, b) sont disposées en décalage le long d'un axe vertical (24) orienté perpendiculairement au plancher de véhicule, en particulier en décalage sans chevauchement avec les ouvertures de tige (23a, b).

7. Dispositif de réglage en longueur selon l'une quelconque revendications 1 à 6, **caractérisé en ce que** la paroi de fixation (5) est disposée de manière angulaire par rapport au plancher de véhicule, de préférence, **en ce que** la paroi de fixation (5) est disposée sensiblement à angle droit par rapport à la paroi de plancher (3), en particulier, **en ce que** la paroi de fixation (5) est disposée sensiblement à angle droit par rapport au plancher de véhicule.

8. Dispositif de réglage en longueur selon l'une quelconque des revendications 1 à 7, **caractérisé en ce que** le rail de plancher (1) comporte des premières fenêtres de blocage (25) décalées de préférence les unes par rapport aux autres le long de l'axe de déplacement (27) pour loger des premiers bras de blocage, de préférence, **en ce que** le rail de plancher (1) comporte des deuxièmes fenêtres de blocage (26) pour loger des deuxièmes bras de blocage, lesquels deuxièmes bras de blocage (26) sont disposés de manière décalée par rapport aux premières fenêtres de blocage (25) en direction de la paroi de fixation (5).

9. Dispositif de réglage en longueur selon l'une quelconque des revendications 1 à 8, **caractérisé en ce que** le dispositif de réglage en longueur comporte un arbre pour entraîner l'écrou de tige et **en ce que** la transmission (9) comporte un logement (11) pour l'arbre, lequel logement (11) est aménagé pour transmettre un mouvement de rotation de l'arbre sur l'écrou de tige, de préférence, **en ce que** le logement est accouplé à une vis sans fin de la transmission (9), laquelle vis sans fin est en prise avec l'écrou de tige.

10. Dispositif de réglage en longueur selon la revendication 9, **caractérisé en ce que** la transmission (9) comporte un carter de transmission (12), dans lequel carter de transmission (12) sont disposés le logement (11) et l'écrou de tige, de préférence également la vis sans fin, en particulier, **en ce que** le carter de transmission (12) est entouré par le support de transmission (10).

11. Dispositif de réglage en longueur selon la revendication 10, **caractérisé en ce que** le carter de transmission (12) fait preuve d'une extension plus importante dans la direction de l'axe vertical (24) que dans la direction de déplacement (27).

12. Dispositif de réglage en longueur selon la revendication 9 ou 10, **caractérisé en ce que** la transmission (9) comporte des montures en caoutchouc (13a, b) qui bordent le carter de transmission (12), de préférence, **en ce que** les montures en caoutchouc (13a, b) sont disposées entre le support de transmission (10) et le carter de transmission (12), en particulier, **en ce que** les montures en caoutchouc (13a, b) sont disposées le long de l'axe de déplacement (27) de manière décalée les uns par rapport aux autres.

13. Dispositif de réglage en longueur selon l'une quelconque des revendications 9 à 12, **caractérisé en ce que** la paroi de fixation (5) comporte une ouverture d'arbre (28) à travers laquelle est passé l'arbre, de préférence, **en ce que** l'ouverture d'arbre (28) est disposée en particulier le long de l'axe de déplacement (7) entre les ouvertures de fixation (20a, b), en particulier **en ce que** l'ouverture d'arbre (28) est disposée le long de l'axe vertical (24) à hauteur des ouvertures de fixation (20a, b).
